# EUROPEAN PATENT SPECIFICATION

(11) **EP 4 261 686 B1**
(45) Date of publication and mention of the grant of the patent: **15.04.2026**
(21) Application number: 22852045.8
(22) Date of filing: 29.07.2022
(51) Int. Cl.: H04L 67/12, G08G 1/00, H04W 4/38, H04W 4/44, H04W 4/46

(54) **DATA SHARING METHOD AND APPARATUS APPLIED TO VEHICLE CONVOY, AND MEDIUM AND COMPUTER PROGRAM PRODUCT**
VERFAHREN UND VORRICHTUNG ZUR GEMEINSAMEN DATENNUTZUNG FÜR FAHRZEUGKONVOI SOWIE MEDIUM UND COMPUTERPROGRAMMPRODUKT
PROCÉDÉ ET APPAREIL DE PARTAGE DE DONNÉES APPLIQUÉS À UN CONVOI DE VÉHICULES, ET SUPPORT ET PRODUIT PROGRAMME D'ORDINATEUR

(30) Priority: 02.08.2021 CN 202110883166
(43) Date of publication of application: 18.10.2023
(73) Proprietor: Tencent Technology (Shenzhen) Company Limited, Shenzhen, Guangdong, 518057 (CN)
(72) Inventor: LEI, Yixue, Shenzhen, Guangdong 518057 (CN)
(74) Representative: Novagraaf International SA
(86) International application number: PCT/CN2022/108794
(87) International publication number: WO 2023/011332

(56) References cited:
- WO-A1-2018/052749
- WO-A1-2018/140191
- WO-A1-2020/050931
- CN-A- 109 747 660
- CN-A- 110 754 074
- CN-A- 113 442 920
- CN-A- 113 590 359
- CN-A- 113 612 844
- CN-A- 113 613 194
- US-A1- 2020 160 722

## Description

### FIELD OF THE TECHNOLOGY

This disclosure relates to the field of computer and communication technologies, and specifically, to a data sharing method and apparatus applied to a vehicle platoon, a medium, and an electronic device.

### BACKGROUND OF THE DISCLOSURE

A vehicle platoon is a fleet composed of a plurality of vehicles. In an application scenario of the vehicle platoon, there are the following four vehicle roles: a leader vehicle, a follower vehicle, a tail vehicle (optional), and a free vehicle (optional). The leader vehicle is defined as the first vehicle in the vehicle platoon, and is responsible for management of the entire vehicle platoon, such as providing data transmission and management for the follower vehicle such as a vehicle position, route planning, and platoon process confirmation. The follower vehicle is defined as a vehicle following behind the leader vehicle in the vehicle platoon, and is an important component vehicle in the vehicle platoon. The tail vehicle is the last vehicle in the fleet platoon. The role may or may not be provided according to requirements, and the tail vehicle is directly used as a follower vehicle. The free vehicle is a vehicle other than those in the vehicle platoon, and the free vehicle does not participate in a data exchange operation in the vehicle platoon.

US 2020/0160722 A1 provides a vehicle convoy management system, configured to: determine a first vehicle and a second vehicle form a convoy, delegate a first task to the first vehicle based on a first set of sensor resources of the first vehicle, delegate a second task to the second vehicle based on a second set of sensor resources of the second vehicle, receive a first information generated in response to the first vehicle completing the first task with the first set of sensor resources, receive a second information generated in response to the second vehicle completing the second task, and transmit at least one of the first information or the second information to at least one vehicle.

### SUMMARY

The invention is set out in the claims annexed hereto.

### BRIEF DESCRIPTION OF THE DRAWINGS

Accompanying drawings herein are incorporated into the specification and constitute a part of this specification, show embodiments that conform to this disclosure, and are used for describing a principle of this disclosure together with this specification. Apparently, the accompanying drawings described below are merely some embodiments of this disclosure, and a person of ordinary skill in the art may further obtain other accompanying drawings according to the accompanying drawings without creative efforts. In the accompanying drawings:
FIG. 1 is a schematic diagram of an application scenario according to embodiments of this disclosure.
FIG. 2 is a schematic diagram of an application scenario according to embodiments of this disclosure.
FIG. 3 is a schematic diagram of an application scenario according to embodiments of this disclosure.
FIG. 4 is a flowchart of a data sharing method applied to a vehicle platoon according to an embodiment of this disclosure.
FIG. 5 is a flowchart of a data sharing method applied to a vehicle platoon according to an embodiment of this disclosure.
FIG. 6 is a flowchart of a data sharing method applied to a vehicle platoon according to an embodiment of this disclosure.
FIG. 7 is a flowchart of a data sharing method applied to a vehicle platoon according to an embodiment of this disclosure.
FIG. 8 is a flowchart of a data sharing method applied to a vehicle platoon according to an embodiment of this disclosure.
FIG. 9 is a flowchart of a data sharing method applied to a vehicle platoon according to an embodiment of this disclosure.
FIG. 10 is a block diagram of a data sharing apparatus applied to a vehicle platoon according to an embodiment of this disclosure.
FIG. 11 is a block diagram of a data sharing apparatus applied to a vehicle platoon according to an embodiment of this disclosure.
FIG. 12 is a schematic structural diagram of a computer system adapted to implement an electronic device according to embodiments of this disclosure.

### DESCRIPTION OF EMBODIMENTS

Exemplary implementations are now described more thoroughly with reference to the accompanying drawings. However, the examples of implementations may be implemented in various forms, and it is not to be understood as being limited to only the examples. Conversely, the implementations are provided to make this disclosure more comprehensive and complete, and comprehensively convey the idea of the implementations to a person skilled in the art.

In addition, the features, structures or characteristics described in this disclosure may be combined in one or more embodiments in any appropriate manner. In the following descriptions, there are a lot of specific details so that embodiments of this disclosure may be comprehensively understood. However, a person skilled in the art is to be aware that, during implementation of technical solutions of this disclosure, not all detailed features in the embodiments may be used, one or more particular details may be omitted, or another method, element, apparatus or step may be used.

The block diagrams shown in the accompanying drawings are merely functional entities and do not necessarily correspond to physically independent entities. That is, the functional entities may be implemented in a software form, or in one or more hardware modules or integrated circuits, or in different networks and/or processor apparatuses and/or microcontroller apparatuses.

The flowcharts shown in the accompanying drawings are merely exemplary descriptions, do not need to include all content and operations/steps, and do not need to be performed in the described orders, either. For example, some operations/steps may be further divided, while some operations/steps may be combined or partially combined. Therefore, an actual execution order may change according to an actual case.

"Plurality of" mentioned herein means two or more. "And/or" describes an association relationship between associated objects and represents that three relationships may exist. For example, A and/or B may represent the following three cases: only A exists, both A and B exist, and only B exists. The character "/" generally indicates an "or" relationship between the contextually associated objects.

In related technologies, sharing of sensor data in a vehicle platoon lacks coordination, thereby leading to excessive dispersion of the sensor data, thus affecting the safety of platoon driving.

Embodiments of this disclosure provide a data sharing method and apparatus applied to a vehicle platoon, a medium, and an electronic device, which can improve the coordination of sharing of sensor data within a vehicle platoon at least to a certain extent, thereby facilitating improvement of the safety of platoon driving.

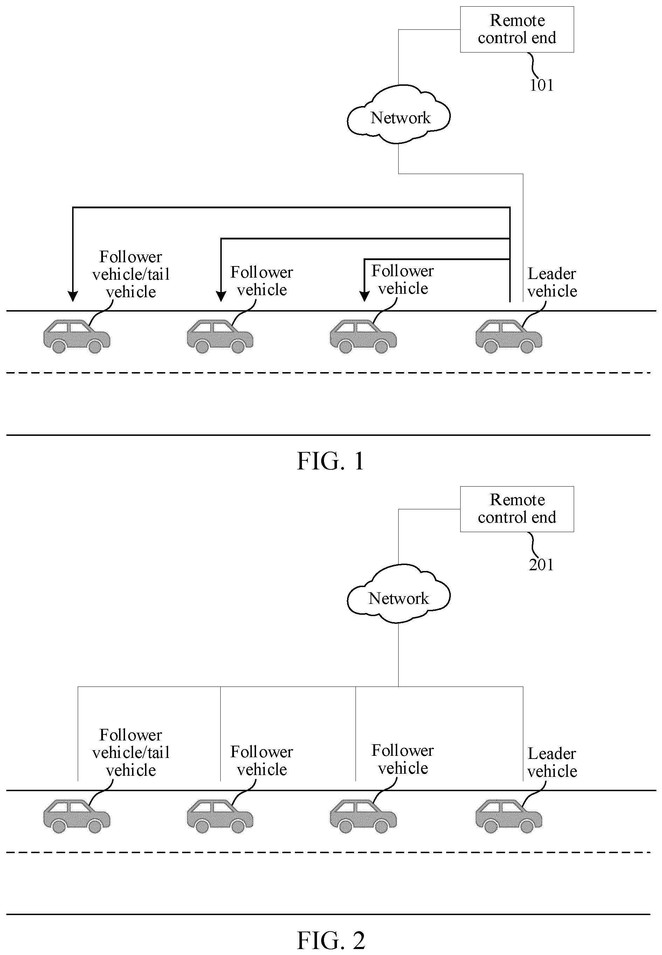

FIG. 1 is a schematic diagram of an application scenario of a data sharing method applied to a vehicle platoon according to embodiments of this disclosure.

As shown in FIG. 1, in an application scenario of this disclosure, a plurality of vehicles form a vehicle platoon, each follower vehicle can communicate with a leader vehicle 102, the leader vehicle 102 can transmit sensor data to the follower vehicle, and the leader vehicle 102 can also transmit a sensor data obtaining request to the follower vehicle 103 to obtain data sensed by the follower vehicle 103 (such as data sensed by a sensor installed on the follower vehicle 103). The leader vehicle 102 can communicate with a remote control end 101 through a network 104, such as a 4G network, a 5G network, or a next-generation wireless communication network. The remote control end 101 may be a cloud server, and the cloud server may be an edge cloud server or a central cloud server. As the name implies, the edge cloud server is a server closer to an edge, for example, provided on a roadside, to provide services nearby, thereby increasing the data response speed; Compared with the edge cloud server, the central cloud server is provided at a remote end and can provide a wider range of services.

In an embodiment of this disclosure, the remote control end 101 can obtain status information of each vehicle in the vehicle platoon, where the status information may include, for example, sensor parameter information on the vehicle. In the system architecture shown in FIG. 1, each follower vehicle can transmit its status information to the leader vehicle, and then the leader vehicle uploads the status information to the remote control end 101 through the network; or the each vehicle can report its status information to the remote control end 101 through the network.

After receiving the status information of the each vehicle, the remote control end 101 can generate data sharing configuration information for the vehicle platoon according to the status information of the each vehicle, the data sharing configuration information being used for representing a sensor data sharing strategy of the each vehicle.

In an implementation, the remote control end 101 can generate the data sharing configuration information by means of artificial intelligence (AI) technology. The AI technology involves a theory, a method, a technology, and an application system that use a digital computer or a machine controlled by the digital computer to simulate, extend, and expand human intelligence, perceive an environment, obtain knowledge, and use knowledge to obtain an optimal result. In other words, AI is a comprehensive technology in computer science and attempts to understand the essence of intelligence and produce a new intelligent machine that can react in a manner similar to human intelligence. AI is to study the design principles and implementation methods of various intelligent machines, to enable the machines to have the functions of perception, reasoning, and decision-making.

In addition, the AI technology is a comprehensive discipline, and relates to a wide range of fields including both hardware-level technologies and software-level technologies. Basic AI technologies generally include technologies such as a sensor, a dedicated AI chip, cloud computing, distributed storage, a big data processing technology, an operating/interaction system, and electromechanical integration. AI software technologies mainly include several major directions such as a computer vision (CV) technology, a speech processing technology, a natural language processing technology, and machine learning/deep learning.

CV is a science that studies how to use a machine to "see", and furthermore, that uses a camera and a computer to replace human eyes to perform machine vision such as recognition, tracking, and measurement on a target, and further perform graphic processing, so that the computer processes the target into an image more suitable for the human eyes to observe, or an image transmitted to an instrument for detection. As a scientific discipline, CV studies related theories and technologies and attempts to establish an AI system that can obtain information from images or multidimensional data. The CV technology generally includes technologies such as image processing, image recognition, image semantic understanding, image retrieval, optical character recognition (OCR), video processing, video semantic understanding, video content/behavior recognition, three-dimensional (3D) object reconstruction, 3D technology, virtual reality, augmented reality, and simultaneous positioning and map construction, and further includes common biometric recognition technologies such as face recognition and fingerprint recognition.

Continuing to refer to FIG. 1, after generating the data sharing configuration information, the remote control end 101 can transmit the data sharing configuration information to the leader vehicle, then the leader vehicle parses the data sharing configuration information to obtain the sensor data sharing strategy of the each vehicle, and distributes sensor data sharing strategies of other vehicles in the vehicle platoon than the leader vehicle to the other vehicles, and then the each vehicle in the vehicle platoon can share the sensor data with the other vehicles in the vehicle platoon based on its own sensor data sharing strategy.

In an embodiment of this disclosure, as shown in FIG. 2, each follower vehicle can also communicate with a remote control end 201 through a network 204. Based on the system architecture, vehicles (including a leader vehicle 202 and follower vehicles 203) can report their status information to the remote control end 201 through the network 204. The follower vehicles 203 can also transmit their status information to the leader vehicle, and then the leader vehicle 202 uploads the status information to the remote control end 201 through the network 204. After receiving status information of each vehicle, the remote control end 201 can generate data sharing configuration information for a vehicle platoon according to the status information of the each vehicle, that is, determine a sensor data sharing strategy of the each vehicle in the vehicle platoon, and then distribute the sensor data sharing strategy of the each vehicle to the each vehicle respectively through the network 204, and then the each vehicle in the vehicle platoon can share sensor data with other vehicles in the vehicle platoon based on its own sensor data sharing strategy.

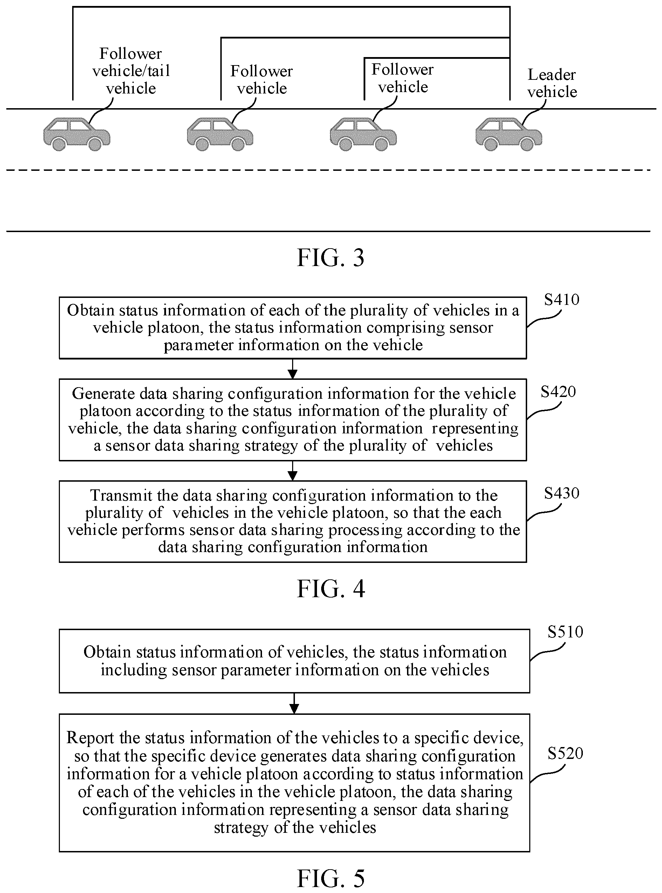

In an embodiment of this disclosure, as shown in FIG. 3, each follower vehicle 303 can report its status information to the leader vehicle 302. After receiving the status information of the each follower vehicle 303, the leader vehicle 302 can generate data sharing configuration information for a vehicle platoon according to the status information of the each follower vehicle 303 and its own status information, that is, determine a sensor data sharing strategy of the each vehicle 303in the vehicle platoon, and then distribute the sensor data sharing strategy of the each follower vehicle to the each follower vehicle 303respectively through a network, and then the each vehicle in the vehicle platoon can share sensor data with other vehicles in the vehicle platoon based on its own sensor data sharing strategy.

Hence, in the technical solutions of the embodiments of this disclosure, status information of vehicles in a vehicle platoon may be synthesized to generate data sharing configuration information for the vehicle platoon, avoiding blindness caused by autonomous coordination between the vehicles, and improving the coordination of sharing of sensor data within the vehicle platoon, thereby facilitating improvement of the safety of vehicle platoon driving.

The implementation details of the technical solutions of the embodiments of this disclosure are described in detail below.

FIG. 4 is a flowchart of a data sharing method applied to a vehicle platoon according to an embodiment of this disclosure. The data sharing method may be performed by a cloud server or by a leader vehicle in the vehicle platoon, and the cloud server may be the remote controller shown in FIG. 1 and FIG. 2. Referring to FIG. 4, the data sharing method includes at least steps S410 to step S430, which are described in detail as follows:
In step S410, status information of each of the plurality of vehicles in the vehicle platoon is obtained, the status information including sensor parameter information on the vehicle.

In an embodiment of this disclosure, the sensor parameter information includes a type of a sensor installed on the vehicle, and at least one of the following information: whether the vehicle is allowed to share sensor data, a type of the sensor data that the vehicle is allowed to share, and a frequency at which the vehicle shares the sensor data.

In an implementation, the type of the sensor may include, for example, one or more of the following: a laser sensor, a vision sensor, a speed sensor, an acceleration sensor, a position sensor, a radar, etc. The type of the sensor data that the vehicle is allowed to share may be one or more of the following: data measured by the laser sensor, image data detected by the vision sensor, speed data detected by the speed sensor, acceleration data detected by the acceleration sensor, position data detected by the position sensor, detection data of the radar, etc. The frequency at which the vehicle shares the sensor data indicates how often the vehicle shares the sensor data.

In an embodiment of this disclosure, if the data sharing method shown in FIG. 4 is performed by the cloud server (the cloud server may be an edge cloud server or a central cloud server), the process for obtaining the status information of the each vehicle in the vehicle platoon by the cloud server may be: receiving the status information of the each vehicle transmitted by the leader vehicle in the vehicle platoon. Specifically, other vehicles in the vehicle platoon than the leader vehicle can transmit their own status information to the leader vehicle, and then the leader vehicle summarizes the own status information and then transmits same to the cloud server. In other embodiments of this disclosure, if the each vehicle in the vehicle platoon can communicate with the cloud server, the cloud server can also receive status information transmitted by the each vehicle in the platoon respectively.

In an embodiment of this disclosure, if the data sharing method shown in FIG. 4 is performed by the leader vehicle in the vehicle platoon, the process for obtaining the status information of the each vehicle in the vehicle platoon by the leader vehicle may be: receiving status information transmitted by the other vehicles in the vehicle platoon than the leader vehicle through PC5 communication. In other embodiments of this disclosure, if the each vehicle in the vehicle platoon can communicate with the cloud server, the other vehicles in the vehicle platoon than the leader vehicle can also transmit their own status information to the cloud server, and then the cloud server forwards the status information to the leader vehicle.

In step S420, data sharing configuration information for the vehicle platoon is generated according to the status information of the plurality of vehicle, the data sharing configuration information representing a sensor data sharing strategy of the plurality of vehicles.

In an implementation, the data sharing configuration information may include the sensor data sharing strategy of the each vehicle, and the sensor data sharing strategy includes at least one of the following: which vehicles sensor data needs to be shared with, a type of the sensor data that needs to be shared, and a frequency of sharing the sensor data.

Specifically, for example, a sensor data sharing strategy of vehicle 1 in the vehicle platoon may be that vehicle 1 needs to provide vehicle 2 and vehicle 3 with image data acquired by the vision sensor, and needs to share the image data every 10 seconds, etc.

Continuing to refer to FIG. 4, in step S430, the data sharing configuration information is transmitted to the plurality of vehicles in the vehicle platoon, so that the each vehicle performs sensor data sharing processing according to the data sharing configuration information.

In an embodiment of this disclosure, if the data sharing method shown in FIG. 4 is performed by the cloud server, the process for transmitting the data sharing configuration information to the each vehicle in the vehicle platoon by the cloud server may be: transmitting the data sharing configuration information to the leader vehicle, then parsing, by the leader vehicle, the data sharing configuration information to obtain the sensor data sharing strategy of the each vehicle, and then distributing, by the leader vehicle, sensor data sharing strategies of the other vehicles in the vehicle platoon than the leader vehicle to the other vehicles.

In an implementation, if the data sharing method shown in FIG. 4 is performed by the cloud server, the process for obtaining the data sharing configuration information to the each vehicle in the vehicle platoon by the cloud server may be: the cloud server determines the sensor data sharing strategy of the each vehicle in the vehicle platoon according to the data sharing configuration information, and then distributes the sensor data sharing strategy of the each vehicle in the vehicle platoon to the each vehicle respectively.

In an embodiment of this disclosure, if the data sharing method shown in FIG. 4 is performed by the leader vehicle in the vehicle platoon, the process for obtaining the data sharing configuration information to the each vehicle in the vehicle platoon by the leader vehicle may be: determining the sensor data sharing strategy of the each vehicle in the vehicle platoon according to the data sharing configuration information, and then distributing, by the leader vehicle, the sensor data sharing strategies of the other vehicles in the vehicle platoon than the leader vehicle to the other vehicles respectively.

The technical solutions of the embodiments of this disclosure are described below from the perspective of a vehicle in a vehicle platoon with reference to FIG. 5.

FIG. 5 is a flowchart of a data sharing method applied to a vehicle platoon according to an embodiment of this disclosure. The data sharing method may be performed by the vehicle in the vehicle platoon. Referring to FIG. 5, the data sharing method includes at least steps S510 to step S520, which are described in detail as follows:
In step S510, status information of the vehicles is obtained, the status information including sensor parameter information on the vehicles.

In an implementation, each vehicle in the vehicle platoon can obtain its own status information, the sensor parameter information including a type of a sensor installed on the vehicle, and at least one of the following information: whether the vehicle is allowed to share sensor data, a type of the sensor data that the vehicle is allowed to share, and a frequency at which the vehicle shares the sensor data.

In an embodiment of this disclosure, the type of the sensor may include, for example, one or more of the following: a laser sensor, a vision sensor, a speed sensor, an acceleration sensor, a position sensor, a radar, etc. The type of the sensor data that the vehicle is allowed to share may be one or more of the following: data measured by the laser sensor, image data detected by the vision sensor, speed data detected by the speed sensor, acceleration data detected by the acceleration sensor, position data detected by the position sensor, detection data of the radar, etc. The frequency at which the vehicle shares the sensor data indicates how often the vehicle shares the sensor data.

In step S520, the status information of the vehicles is reported to a specific device, so that the specific device generates data sharing configuration information for the vehicle platoon according to status information of each of the vehicles in the vehicle platoon, the data sharing configuration information representing a sensor data sharing strategy of the vehicles.

In an embodiment of this disclosure, if the specific device may be a cloud server (the cloud server may be an edge cloud server or a central cloud server), and in this case, the cloud server can generate the data sharing configuration information for the vehicle platoon according to the status information of the each vehicle in the vehicle platoon. In an implementation, the each vehicle can directly transmit the status information to the cloud server, or can also transmit the status information to a leader vehicle in the vehicle platoon through PC5 communication, and then the leader vehicle summarizes the status information and then transmits same to the cloud server.

In an embodiment of this disclosure, if the specific device may also be the leader vehicle in the vehicle platoon, and in this case, the leader vehicle can generate the data sharing configuration information for the vehicle platoon according to the status information of the each vehicle in the vehicle platoon. In an implementation, the each vehicle can directly transmit the status information to the leader vehicle through PC5 communication, or can also transmit the status information to the cloud server, and then the cloud server summarizes the status information and then transmits same to the leader vehicle in the vehicle platoon.

In an embodiment of this disclosure, the vehicle in the vehicle platoon can also transmit a sensor data sharing request to a specific vehicle in the vehicle platoon, the sensor data sharing request being used for requesting the specified vehicle to return specified sensor data, and then receive a response result returned by the specific vehicle for the sensor data sharing request, the response result including the specific sensor data. The technical solution of the embodiment enables the vehicle in the vehicle platoon to obtain the sensor data of the specific vehicle by transmitting the sensor data sharing request according to requirements.

In the technical solutions provided in some embodiments of this disclosure, status information of each vehicle in a vehicle platoon is obtained, data sharing configuration information for the vehicle platoon is generated according to the status information of the each vehicle, and then the data sharing configuration information is transmitted to the each vehicle in the vehicle platoon, so that the each vehicle performs sensor data sharing processing according to the data sharing configuration information, such that the status information of vehicles in the vehicle platoon may be synthesized to generate the sharing configuration information for the vehicle platoon, avoiding blindness caused by autonomous coordination between the vehicles, and improving the coordination of sharing of sensor data within the vehicle platoon, thereby facilitating improvement of the safety of vehicle platoon driving.

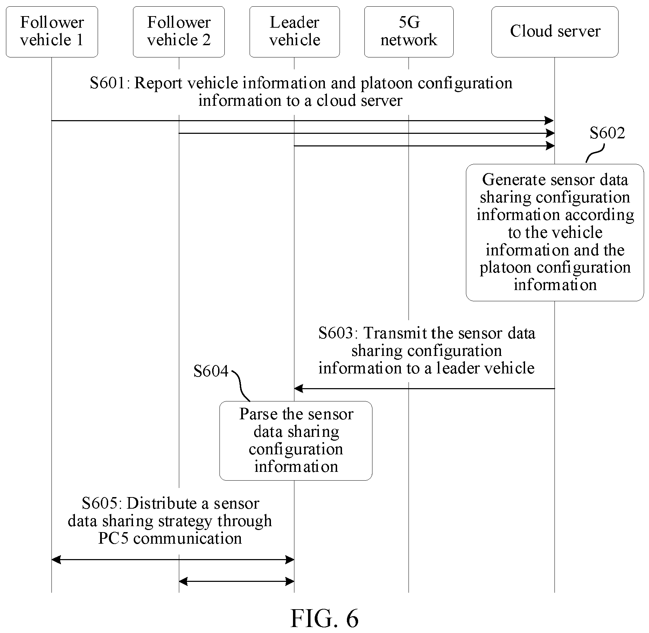

The implementation details of the technical solutions of the embodiments of this disclosure are described in detail below with reference to FIG. 6 to FIG. 9.

As shown in FIG. 6, a data sharing method applied to a vehicle platoon according to an embodiment of this disclosure includes the following steps:
Step S601. Each vehicle (including a leader vehicle and follower vehicles, in the drawing, two follower vehicles being taken as an example for description) in the vehicle platoon reports vehicle information and platoon configuration information to a cloud server.

In an implementation, the vehicle information includes sensor parameter information on the vehicle, the sensor parameter information including a type of a sensor installed on the vehicle, and at least one of the following information: whether the vehicle is allowed to share sensor data, a type of the sensor data that the vehicle is allowed to share, and a frequency at which the vehicle shares the sensor data.

In an implementation, the type of the sensor may include, for example, one or more of the following: a laser sensor, a vision sensor, a speed sensor, an acceleration sensor, a position sensor, a radar, etc. The type of the sensor data that the vehicle is allowed to share may be one or more of the following: data measured by the laser sensor, image data detected by the vision sensor, speed data detected by the speed sensor, acceleration data detected by the acceleration sensor, position data detected by the position sensor, detection data of the radar, etc. The frequency at which the vehicle shares the sensor data indicates how often the vehicle shares the sensor data.

In an implementation, the platoon configuration information may include identification information of a vehicle platoon to which the vehicle belongs, role information (such as a leader vehicle or a follower vehicle) of the vehicle in the vehicle platoon, etc.

Step S602. The cloud server generates sensor data sharing configuration information according to the vehicle information and the platoon configuration information.

In an implementation, the sensor data sharing configuration information may include a sensor data sharing strategy of the each vehicle, and the sensor data sharing strategy includes at least one of the following: which vehicles sensor data needs to be shared with, a type of the sensor data that needs to be shared, and a frequency of sharing the sensor data. Of course, the sensor data sharing strategy may also include a data format, a data volume, etc. when the sensor data is shared.

Step S603. The cloud server transmits the sensor data sharing configuration information to the leader vehicle.

Step S604. The leader vehicle parses the sensor data sharing configuration information to obtain the sensor data sharing strategy of the each vehicle.

Step S605. The leader vehicle distributes the sensor data sharing strategy to each follower vehicle through PC5 communication, and then the each vehicle in the vehicle platoon can share the sensor data according to the sensor data sharing strategy.

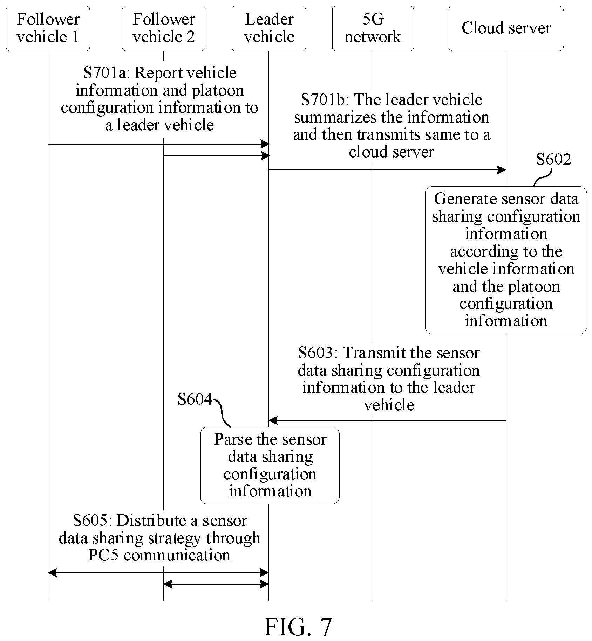

Based on the technical solution of the embodiment shown in FIG. 6, in one embodiment of this disclosure, as shown in FIG. 7, step S601 shown in FIG. 6 may be replaced by step S701a and step S701b, specifically:

In step S701a, each follower vehicle (in the drawing, two follower vehicles being taken as an example for description) in a vehicle platoon reports vehicle information and platoon configuration information to a leader vehicle.

In step S701b, the leader vehicle summarizes the information reported by the vehicles in the vehicle platoon and then transmits same to a cloud server.

That is, in the embodiment shown in FIG. 7, the each follower vehicle does not directly communicate with the cloud server, but reports the vehicle information and the platoon configuration information to the leader vehicle, and the leader vehicle summarizes the information and then transmits same to the cloud server. Other steps in FIG. 7 are the same as the embodiments as described with reference to FIG. 6.

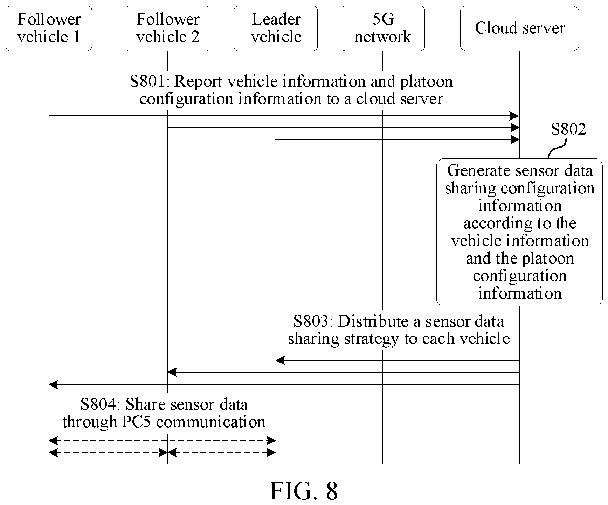

As shown in FIG. 8, a data sharing method applied to a vehicle platoon according to an embodiment of this disclosure includes the following steps:
Step S801. Each vehicle (including a leader vehicle and follower vehicles, in the drawing, two follower vehicles being taken as an example for description) in the vehicle platoon reports vehicle information and platoon configuration information to a cloud server.

In an implementation, the vehicle information includes sensor parameter information on the vehicle, the sensor parameter information including a type of a sensor installed on the vehicle, and at least one of the following information: whether the vehicle is allowed to share sensor data, a type of the sensor data that the vehicle is allowed to share, and a frequency at which the vehicle shares the sensor data.

In an implementation, the type of the sensor may include, for example, one or more of the following: a laser sensor, a vision sensor, a speed sensor, an acceleration sensor, a position sensor, a radar, etc. The type of the sensor data that the vehicle is allowed to share may be one or more of the following: data measured by the laser sensor, image data detected by the vision sensor, speed data detected by the speed sensor, acceleration data detected by the acceleration sensor, position data detected by the position sensor, detection data of the radar, etc. The frequency at which the vehicle shares the sensor data indicates how often the vehicle shares the sensor data.

In an implementation, the platoon configuration information may include identification information of a vehicle platoon to which the vehicle belongs, role information (such as a leader vehicle or a follower vehicle) of the vehicle in the vehicle platoon, etc.

Step S802. The cloud server generates sensor data sharing configuration information according to the vehicle information and the platoon configuration information.

In an implementation, the sensor data sharing configuration information may include a sensor data sharing strategy of the each vehicle, and the sensor data sharing strategy includes at least one of the following: which vehicles sensor data needs to be shared with, a type of the sensor data that needs to be shared, and a frequency of sharing the sensor data. Of course, the sensor data sharing strategy may also include a data format, a data volume, etc. when the sensor data is shared.

Step S803. The cloud server distributes the sensor data sharing strategy to the each vehicle in the vehicle platoon according to the sensor data sharing configuration information.

Step S804. The each vehicle in the vehicle platoon can share the sensor data according to the sensor data sharing strategy.

That is, in the embodiment shown in FIG. 8, after the cloud server generates the sensor data sharing configuration information, the sensor data sharing configuration information is no longer forwarded by the leader vehicle, but directly distributed to the each vehicle in the vehicle platoon. In an implementation, step S801 shown in FIG. 8 may also be replaced by steps S701a and S701b shown in FIG. 7, that is, the leader vehicle collects and summarizes the information of the each vehicle in the vehicle platoon and then reports same to the cloud server.

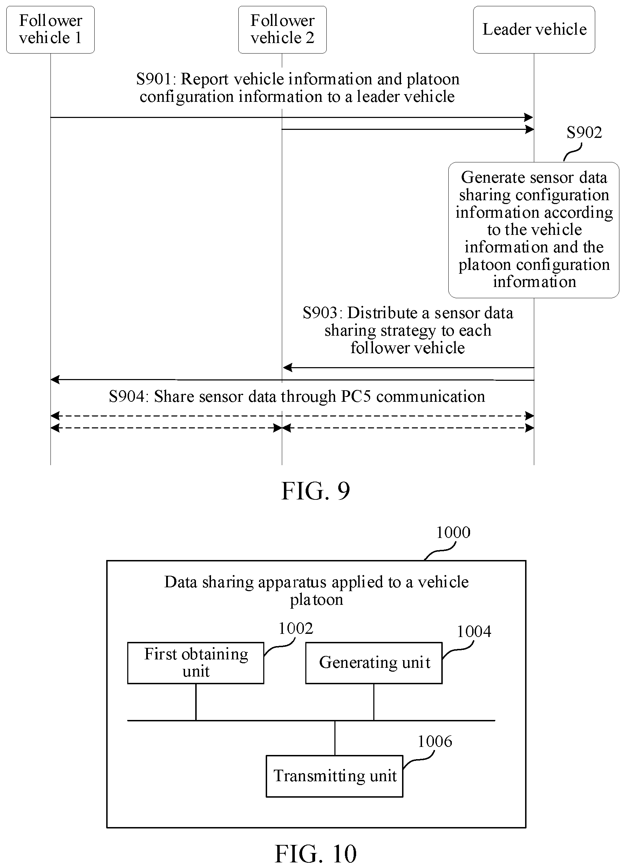

As shown in FIG. 9, a data sharing method applied to a vehicle platoon according to an embodiment of this disclosure includes the following steps:
Step S901. Each follower vehicle (in the drawing, two follower vehicles being taken as an example for description) in a vehicle platoon reports vehicle information and platoon configuration information to a leader vehicle.

In an implementation, the vehicle information includes sensor parameter information on the vehicle, the sensor parameter information including a type of a sensor installed on the vehicle, and at least one of the following information: whether the vehicle is allowed to share sensor data, a type of the sensor data that the vehicle is allowed to share, and a frequency at which the vehicle shares the sensor data.

In an implementation, the type of the sensor may include, for example, one or more of the following: a laser sensor, a vision sensor, a speed sensor, an acceleration sensor, a position sensor, a radar, etc. The type of the sensor data that the vehicle is allowed to share may be one or more of the following: data measured by the laser sensor, image data detected by the vision sensor, speed data detected by the speed sensor, acceleration data detected by the acceleration sensor, position data detected by the position sensor, detection data of the radar, etc. The frequency at which the vehicle shares the sensor data indicates how often the vehicle shares the sensor data.

In an implementation, the platoon configuration information may include identification information of a vehicle platoon to which the vehicle belongs, role information (such as a leader vehicle or a follower vehicle) of the vehicle in the vehicle platoon, etc.

Step S902. The leader vehicle generates sensor data sharing configuration information according to the vehicle information and the platoon configuration information.

In an implementation, the sensor data sharing configuration information may include a sensor data sharing strategy of the each vehicle, and the sensor data sharing strategy includes at least one of the following: which vehicles sensor data needs to be shared with, a type of the sensor data that needs to be shared, and a frequency of sharing the sensor data. Of course, the sensor data sharing strategy may also include a data format, a data volume, etc. when the sensor data is shared.

Step S903. The leader vehicle distributes the sensor data sharing strategy to the each follower vehicle in the vehicle platoon according to the sensor data sharing configuration information.

Step S904. The each vehicle in the vehicle platoon can share the sensor data according to the sensor data sharing strategy.

That is, in the embodiment shown in FIG. 9, the sensor data sharing configuration information can be generated by the leader vehicle instead of by a cloud server, and thus the leader vehicle is required to have strong data processing capabilities.

In the embodiments shown in FIG. 6 to FIG. 9, the each vehicle can also obtain certain sensor data of a specific vehicle through a request while sharing the sensor data based on the sensor data sharing strategy, for example, follower vehicle 1 transmits to follower vehicle 2 a request to obtain data of a vision sensor of follower vehicle 2, to satisfy the service requirements of follower vehicle 1.

Hence, in the technical solutions of the embodiments of this disclosure, status information of vehicles in a vehicle platoon may be synthesized to generate data sharing configuration information for the vehicle platoon, avoiding blindness caused by autonomous coordination between the vehicles, and improving the coordination of sharing of sensor data within the vehicle platoon, thereby facilitating improvement of the safety of vehicle platoon driving.

The following describes apparatus embodiments of this disclosure, which may be used for performing the data sharing method applied to a vehicle platoon in the foregoing embodiment of this disclosure. For details undisclosed in the apparatus embodiments of this disclosure, reference is made to the foregoing embodiments of the data sharing method applied to a vehicle platoon of this disclosure.

FIG. 10 is a block diagram of a data sharing apparatus applied to a vehicle platoon according to an embodiment of this disclosure. The data sharing apparatus may be provided in a cloud server or a leader vehicle in the vehicle platoon.

Referring to FIG. 10, a data sharing apparatus 1000 applied to a vehicle platoon according to an embodiment of this disclosure includes: a first obtaining unit 1002, a generating unit 1004, and a transmitting unit 1006.

The first obtaining unit 1002 is configured to obtain status information of each vehicle in the vehicle platoon, the status information including sensor parameter information on the vehicle. The generating unit 1004 is configured to generate data sharing configuration information for the vehicle platoon according to the status information of the each vehicle, the data sharing configuration information being used for representing a sensor data sharing strategy of the each vehicle. The transmitting unit 1006 is configured to transmit the data sharing configuration information to the each vehicle in the vehicle platoon, so that the each vehicle performs sensor data sharing processing according to the data sharing configuration information.

In some embodiments of this disclosure, based on the foregoing solutions, a plurality of vehicles include a leader vehicle, and the data sharing apparatus 1000 is provided in a cloud server communicating with the leader vehicle; and the transmitting unit 1006 is configured to: transmit the data sharing configuration information to the leader vehicle, so that the leader vehicle parses the data sharing configuration information to obtain the sensor data sharing strategy of the each vehicle, and distributes sensor data sharing strategies of other vehicles in the vehicle platoon than the leader vehicle to the other vehicles.

In some embodiments of this disclosure, based on the foregoing solutions, the data sharing apparatus 1000 is provided in a cloud server communicating with the each vehicle in the vehicle platoon; and the transmitting unit 1006 is configured to: determine the sensor data sharing strategy of the each vehicle in the vehicle platoon according to the data sharing configuration information; and distribute the sensor data sharing strategy of the each vehicle in the vehicle platoon to the each vehicle respectively.

In some embodiments of this disclosure, based on the foregoing solutions, the first obtaining unit 1002 is configured to: receive the status information of the each vehicle transmitted by the leader vehicle in the vehicle platoon, status information of the other vehicles in the vehicle platoon than the leader vehicle being transmitted to the leader vehicle by the other vehicles.

In some embodiments of this disclosure, based on the foregoing solutions, the first obtaining unit 1002 is configured to: receive the status information transmitted by the each vehicle in the vehicle platoon respectively.

In some embodiments of this disclosure, based on the foregoing solutions, a plurality of vehicles include a leader vehicle, and the data sharing apparatus 1000 is provided in the leader vehicle; and the transmitting unit 1006 is configured to: determine the sensor data sharing strategy of the each vehicle in the vehicle platoon according to the data sharing configuration information; and distribute sensor data sharing strategies of other vehicles in the vehicle platoon than the leader vehicle to the other vehicles respectively.

In some embodiments of this disclosure, based on the foregoing solutions, the first obtaining unit 1002 is configured to: receive status information transmitted by the other vehicles in the vehicle platoon than the leader vehicle through PC5 communication.

In some embodiments of this disclosure, based on the foregoing solutions, the first obtaining unit 1002 is configured to: receive status information of the other vehicles in the vehicle platoon than the leader vehicle transmitted by a cloud server, the status information of the other vehicles being transmitted to the cloud server by the other vehicles.

In some embodiments of this disclosure, based on the foregoing solutions, the sensor parameter information includes a type of a sensor installed on the vehicle, and at least one of the following information: whether the vehicle is allowed to share sensor data, a type of the sensor data that the vehicle is allowed to share, and a frequency at which the vehicle shares the sensor data.

In some embodiments of this disclosure, based on the foregoing solutions, the sensor data sharing strategy includes at least one of the following: which vehicles sensor data needs to be shared with, a type of the sensor data that needs to be shared, and a frequency of sharing the sensor data.

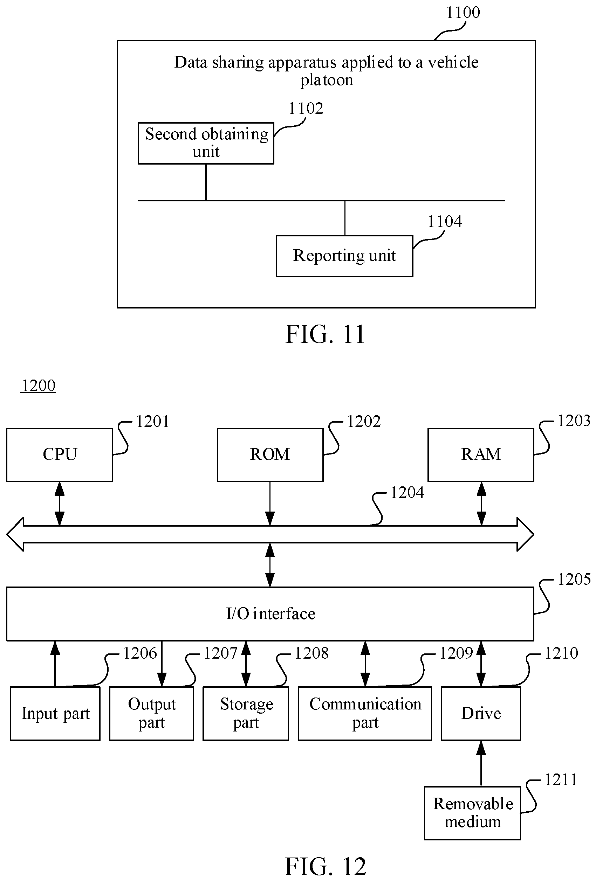

FIG. 11 is a block diagram of a data sharing apparatus applied to a vehicle platoon according to an embodiment of this disclosure. The data sharing apparatus may be provided in a vehicle in the vehicle platoon.

Referring to FIG. 11, a data sharing apparatus 1100 applied to a vehicle platoon according to an embodiment of this disclosure includes: a second obtaining unit 1102 and a reporting unit 1104.

The second obtaining unit 1102 is configured to obtain status information of vehicles, the status information including sensor parameter information on the vehicles. The reporting unit 1104 is configured to report the status information of the vehicles to a specific device, so that the specific device generates data sharing configuration information for the vehicle platoon according to status information of each vehicle in the vehicle platoon, the data sharing configuration information being used for representing a sensor data sharing strategy of the each vehicle.

In some embodiments of this disclosure, based on the foregoing solutions, the data sharing apparatus 1100 further includes: a transmitting unit, configured to transmit a sensor data sharing request to a specific vehicle in the vehicle platoon, the sensor data sharing request being used for requesting the specific vehicle to return specific sensor data; and a receiving unit, configured to receive a response result returned by the specific vehicle for the sensor data sharing request, the response result including the specific sensor data.

FIG. 12 is a schematic structural diagram of a computer system adapted to implement an electronic device according to embodiments of this disclosure.

A computer system 1200 of the electronic device shown in FIG. 12 is merely an example, and does not constitute any limitation on functions and use ranges of the embodiments of this disclosure.

As shown in FIG. 12, the computer system 1200 includes a central processing unit (CPU) 1201, which may perform various suitable actions and processing based on a program stored in a read-only memory (ROM) 1202 or a program loaded from a storage part 1208 into a random access memory (RAM) 1203, for example, perform the method described in the foregoing embodiments. The RAM 1203 further stores various programs and data required for system operations. The CPU 1201, the ROM 1202, and the RAM 1203 are connected to each other through a bus 1204. An input/output (I/O) interface 1205 is also connected to the bus 1204.

The following components are connected to the I/O interface 1205: an input part 1206 including a keyboard, a mouse, or the like; an output part 1207 including a cathode ray tube (CRT), a liquid crystal display (LCD), a speaker, or the like; a storage part 1208 including a hard disk or the like; and a communication part 1209 including a network interface card such as a local area network (LAN) card or a modem. The communication part 1209 performs communication processing through a network such as the Internet. A drive 1210 is also connected to the I/O interface 1205 as required. A removable medium 1211, such as a magnetic disk, an optical disk, a magneto-optical disk, or a semiconductor memory, and is installed on the drive 1210 as required, so that a computer program read from the removable medium is installed into the storage part 1208 as required.

Particularly, according to embodiments of this disclosure, the processes described above with reference to flowcharts may be implemented as computer software programs. For example, the embodiments of this disclosure provide a computer program product, including a computer program carried on a computer-readable medium, the computer program including a computer program configured to perform a method shown in a flowchart. In such embodiments, the computer program may be downloaded and installed from the network through the communication part 1209, and/or installed from the removable medium 1211. When the computer program is executed by the CPU 1201, the various functions defined in the system of this disclosure are executed.

The computer-readable medium shown in the embodiments of this disclosure may be a computer-readable signal medium, or a computer-readable storage medium, or any combination thereof. The computer-readable storage medium may be, for example, but is not limited to, an electric, magnetic, optical, electromagnetic, infrared or semiconductive system, apparatus or device, or any combination thereof. A more specific example of the computer-readable storage medium may include, but is not limited to: an electrical connection having one or more wires, a portable computer magnetic disk, a hard disk, an RAM, an ROM, an erasable programmable read-only memory (EPROM), a flash memory, an optical fiber, a compact disc read-only memory (CD-ROM), an optical storage device, a magnetic storage device, or any appropriate combination thereof. In this disclosure, the computer-readable storage medium may be any tangible medium containing or storing a program, and the program may be used by or used in combination with an instruction execution system, an apparatus, or a device. In this disclosure, the computer-readable signal medium may include a data signal propagated in a baseband or as part of a carrier, and carries a computer-readable computer program. Such a data signal propagated may be in a plurality of forms, including, but not limited to, an electromagnetic signal, an optical signal, or any appropriate combination thereof. The computer-readable signal medium may be further any computer-readable medium in addition to a computer-readable storage medium, and the computer-readable medium may send, propagate, or transmit a program that is used by or used in combination with an instruction execution system, an apparatus, or a device. The computer program included in the computer-readable medium may be transmitted by using any suitable medium, including but not limited to: a wireless medium, a wired medium, or the like, or any appropriate combination thereof.

The flowcharts and block diagrams in the accompanying drawings illustrate possible system architectures, functions and operations that may be implemented by a system, a method, and a computer program product according to various embodiments of this disclosure. Each block in a flowchart or a block diagram may represent a module, a program segment, or a part of a code. The module, the program segment, or the part of the code includes one or more executable instructions used for implementing specified logic functions. In some implementations used as substitutes, functions annotated in blocks may alternatively occur in a sequence different from that annotated in an accompanying drawing. For example, actually two blocks shown in succession may be performed basically in parallel, and sometimes the two blocks may be performed in a reverse sequence. This is determined by a related function. Each block in a block diagram or a flowchart and a combination of blocks in the block diagram and/or the flowchart may be implemented by using a dedicated hardware-based system configured to perform a specified function or operation, or may be implemented by using a combination of dedicated hardware and a computer instruction.

Related units described in the embodiments of this disclosure may be implemented in a software manner, or may be implemented in a hardware manner, and the units described may also be provided in a processor. Names of the units do not constitute a limitation on the units in a certain case.

According to another aspect, this disclosure further provides a computer-readable medium. The computer-readable medium may be included in the electronic device described in the foregoing embodiments, or may exist separately and is not included in the electronic device. The computer-readable medium carries one or more programs, the one or more programs, when executed by the electronic device, causing the electronic device to implement the method described in the foregoing embodiments.

Although several modules or units of a device configured to perform actions are mentioned in the foregoing detailed description, such division is not mandatory. Actually, according to the implementations of this disclosure, the features and functions of two or more modules or units described above may be specifically implemented in one module or unit. On the contrary, the features and functions of one module or unit described above may be further divided to be implemented by a plurality of modules or units.

According to the foregoing descriptions of the implementations, a person skilled in the art may readily understand that the exemplary implementations described herein may be implemented by using software, or may be implemented by combining software and necessary hardware. Therefore, the technical solutions of the implementations of this disclosure may be implemented in a form of a software product. The software product may be stored in a non-volatile storage medium (which may be a CD-ROM, a USB flash drive, a removable hard disk, or the like) or on the network, including several instructions causing a computing device (which may be a personal computer, a server, a touch terminal, a network device, or the like) to perform the methods according to the implementations of this disclosure.

After considering the specification and practicing the implementations of the present disclosure, a person skilled in the art may easily conceive of other implementations of this disclosure. This disclosure is intended to cover any variations, uses, or adaptive changes of this disclosure. The variations, uses, or adaptive changes follow the general principles of this disclosure and include common general knowledge or common technical means in the art, which are not disclosed in this disclosure.

It is to be understood that this disclosure is not limited to the precise structures described above and shown in the accompanying drawings, and various modifications and changes may be made without departing from the scope of this disclosure. The scope of this disclosure is subject only to the appended claims.

## Claims

1. A data sharing method for use with a vehicle platoon, the vehicle platoon comprising a leader vehicle and a plurality of follower vehicles, and the data sharing method being performed by an edge cloud server communicating with the leader vehicle, comprising:
receiving, from the leader vehicle, status information of each vehicle in the vehicle platoon, wherein
each of the plurality of follower vehicles transmits the status information to the leader vehicle through PC5 communication;
the status information comprises a type of a sensor installed on the respective vehicle, whether the respective vehicle is allowed to share sensor data, a type of the sensor data that the respective vehicle is allowed to share, and a frequency at which the respective vehicle shares the sensor data;
generating (S420), according to the status information of each vehicle, data sharing configuration information for the vehicle platoon, the data sharing configuration information representing a sensor data sharing strategy of each vehicle, comprising: which vehicles the sensor data needs to be shared with, a type of the sensor data that needs to be shared, and a frequency of sharing the sensor data; and
transmitting (S430) the data sharing configuration information to the leader vehicle, so that
the leader vehicle parses the data sharing configuration information to obtain the sensor data sharing strategy of each vehicle, and distributes the sensor data sharing strategy to each vehicle through PC5 communication; and
each vehicle performs sensor data sharing processing according to the sensor data sharing strategy.

2. A data sharing apparatus for use with a vehicle platoon, the vehicle platoon comprising a leader vehicle and a plurality of follower vehicles, and the data sharing apparatus comprising:
a first obtaining unit (1002), configured to receive, from the leader vehicle, status information of each vehicle in the vehicle platoon, wherein each of the plurality of follower vehicles transmits the status information to the leader vehicle through PC5 communication, and the status information comprises a type of a sensor installed on the respective vehicle, whether the respective vehicle is allowed to share sensor data, a type of the sensor data that the respective vehicle is allowed to share, and a frequency at which the respective vehicle shares the sensor data;
a generating unit (1004), configured to generate, according to the status information of each vehicle, data sharing configuration information for the vehicle platoon, the data sharing configuration information representing a sensor data sharing strategy of each vehicle, comprising: which vehicles the sensor data needs to be shared with, a type of the sensor data that needs to be shared, and a frequency of sharing the sensor data; and
a transmitting unit (1006), configured to transmit the data sharing configuration information to the leader vehicle, so that the leader vehicle parses the data sharing configuration information to obtain the sensor data sharing strategy of each vehicle, and distributes the sensor data sharing strategy to each vehicle through PC5 communication; and each vehicle performs sensor data sharing processing according to the sensor data sharing strategy.

3. A computer-readable medium, storing a computer program, the computer program, when executed by a processor, implementing the data sharing method applied to a vehicle platoon according to claim 1.

4. A computer program product, comprising a computer instruction, the computer instruction being stored in a computer-readable storage medium, and a processor of a computer device reading the computer instruction from the computer-readable storage medium and executing the computer instruction to cause the computer device to perform the data sharing method applied to a vehicle platoon according to claim 1.

## Patentansprüche

1. Verfahren zur gemeinsamen Nutzung von Daten zur Verwendung mit einer Fahrzeugkolonne, wobei die Fahrzeugkolonne ein Führungsfahrzeug und eine Vielzahl von Folgefahrzeugen umfasst, und wobei das Verfahren zur gemeinsamen Nutzung von Daten von einem Edgecloudserver durchgeführt wird, der mit dem Führungsfahrzeug kommuniziert, das Folgendes umfasst:
Empfangen von Statusinformationen jedes Fahrzeugs in der Fahrzeugkolonne vom Führungsfahrzeug, wobei
jedes der Vielzahl von Folgefahrzeugen die Statusinformationen über PC5-Kommunikation zum Führungsfahrzeug überträgt;
die Statusinformationen eine Art eines Sensors, der im jeweiligen Fahrzeug installiert ist, ob es dem jeweiligen Fahrzeug erlaubt ist, Sensordaten gemeinsam zu nutzen, eine Art der Sensordaten, deren gemeinsame Nutzung durch das jeweilige Fahrzeug erlaubt ist, sowie eine Frequenz umfassen, mit der das jeweilige Fahrzeug die Sensordaten gemeinsam genutzt;
Erzeugen (S420) von Auslegungsinformationen zur gemeinsamen Nutzung von Daten für die Fahrzeugkolonne gemäß den Statusinformationen jedes Fahrzeugs, wobei die Auslegungsinformationen zur gemeinsamen Nutzung von Daten eine Strategie zur gemeinsamen Nutzung von Sensordaten jedes Fahrzeugs repräsentieren, die Folgendes umfasst: mit welchen Fahrzeugen die Sensordaten gemeinsam zu nutzen sind, eine Art der Sensordaten, die gemeinsam genutzt werden müssen, und eine Frequenz zur gemeinsamen Nutzung der Sensordaten; und
Übertragen (S430) die Auslegungsinformationen zur gemeinsamen Nutzung von Daten zum Führungsfahrzeug, derart, dass
das Führungsfahrzeug die Auslegungsinformationen zur gemeinsamen Nutzung von Daten parst, um die Strategie zur gemeinsamen Nutzung der Sensordaten jedes Fahrzeugs zu erhalten, und die Strategie zur gemeinsamen Nutzung der Sensordaten über PC5-Kommunikation an jedes Fahrzeug verteilt; und
jedes Fahrzeug gemäß der Strategie zur gemeinsamen Nutzung der Sensordaten eine Verarbeitung zur gemeinsamen Nutzung der Sensordaten durchführt.

2. Einrichtung zur gemeinsamen Nutzung von Daten zur Verwendung mit einer Fahrzeugkolonne, wobei die Fahrzeugkolonne ein Führungsfahrzeug und eine Vielzahl von Folgefahrzeugen umfasst, und wobei die Einrichtung zur gemeinsamen Nutzung von Daten Folgendes umfasst:
eine erste Erhaltungseinheit (1002), die dazu ausgelegt ist, Statusinformationen von jedem Fahrzeug in der Fahrzeugkolonne vom Führungsfahrzeug zu empfangen, wobei jedes der Vielzahl von Folgefahrzeugen die Statusinformationen über PC5-Kommunikation zum Führungsfahrzeug überträgt und die Statusinformationen eine Art eines Sensors, der im jeweiligen Fahrzeug installiert ist, ob es dem jeweiligen Fahrzeug erlaubt ist, Sensordaten gemeinsam zu nutzen, eine Art der Sensordaten, deren gemeinsame Nutzung durch das jeweilige Fahrzeug erlaubt ist, sowie eine Frequenz umfassen, mit der das jeweilige Fahrzeug die Sensordaten gemeinsam nutzt;
eine Erzeugungseinheit (1004), die dazu ausgelegt ist, Auslegungsinformationen zur gemeinsamen Nutzung von Daten für die Fahrzeugkolonne gemäß den Statusinformationen jedes Fahrzeugs zu erzeugen, wobei die Auslegungsinformationen zur gemeinsamen Nutzung von Daten eines Strategie zur gemeinsamen Nutzung von Sensordaten jedes Fahrzeugs repräsentieren, die Folgendes umfasst: mit welchen Fahrzeugen die Sensordaten gemeinsam zu nutzen sind, eine Art der Sensordaten, die gemeinsam genutzt werden müssen, und eine Frequenz zur gemeinsamen Nutzung der Sensordaten; und
eine Übertragungseinheit (1006), die dazu ausgelegt ist, die Auslegungsinformationen zur gemeinsamen Nutzung der Daten zu übertragen, derart, dass das Führungsfahrzeug die Auslegungsinformationen zur gemeinsamen Nutzung der Daten parst, um die Strategie zur gemeinsamen Nutzung der Sensordaten von jedem Fahrzeug zu erhalten, und die Strategie zur gemeinsamen Nutzung der Sensordaten über PC5-Kommunikation an jedes Fahrzeug verteilt; und jedes Fahrzeug gemäß der Strategie zur gemeinsamen Nutzung der Sensordaten eine Verarbeitung zur gemeinsamen Nutzung von Sensordaten durchführt.

3. Computerlesbares Medium, in dem ein Computerprogramm gespeichert ist, wobei das Computerprogramm, wenn es von einem Prozessor ausgeführt wird, das Verfahren zur gemeinsamen Nutzung der Daten, das auf eine Fahrzeugkolonne angewandt wird, nach Anspruch 1 implementiert.

4. Computerprogrammprodukt, das eine Computeranweisung, wobei die Computeranweisung in einem computerlesbaren Speichermedium gespeichert ist, sowie einen Prozessor einer Computervorrichtung umfasst, der die Computeranweisung im computerausführbaren Speichermedium liest und die Computeranweisung ausführt, um die Computervorrichtung zu veranlassen, das auf eine Fahrzeugkolonne angewandte Verfahren zur gemeinsamen Nutzung der Daten nach Anspruch 1 durchzuführen.

## Revendications

1. Procédé de partage de données destiné à être utilisé avec un convoi de véhicules, le convoi de véhicules comprenant un véhicule de tête et une pluralité de véhicules suiveurs, et le procédé de partage de données étant mis en œuvre par un serveur en nuage périphérique communiquant avec le véhicule de tête, comprenant les étapes suivantes :
recevoir du véhicule de tête des informations de statut de de chaque véhicule du convoi de véhicules, dans lequel
chacun de la pluralité de véhicules suiveurs transmet les informations de statut au véhicule de tête par communication PC5 ;
les informations de statut comprennent un type d'un capteur installé sur le véhicule respectif, une information quant à si le véhicule respectif est autorisé à partager des données de capteur, un type de données de capteur que le véhicule respectif est autorisé à partager et une fréquence à laquelle le véhicule respectif partage les données de capteur ;
selon les informations de statut de chaque véhicule, générer (S420) des informations de configuration de partage de données pour le convoi de véhicules, les informations de configuration de partage de données représentant une stratégie de partage de données de capteur de chaque véhicule comprenant : les véhicules avec lesquels les données de capteur doivent être partagées, un type des données de capteur qui doivent être partagées, et une fréquence de partage des données de capteur ; et
transmettre (S430) les informations de configuration de partage de données au véhicule de tête de sorte que le véhicule de tête analyse les informations de configuration de partage de données afin d'obtenir les stratégie de partage de données de capteur de chaque véhicule et distribue la stratégie de partage de données de capteur à chaque véhicule par communication PC5 ; et
chaque véhicule effectue un traitement de partage de données de capteur selon les stratégie de partage de données de capteur.

2. Appareil de partage de données destiné à être utilisé avec un convoi de véhicules, le convoi de véhicules comprenant un véhicule de tête et une pluralité de véhicules suiveurs, et l'appareil de partage de données comprenant :
une première unité d'obtention (1002) configurée pour recevoir du véhicule de tête, des informations de statut de chaque véhicule du convoi de véhicules, dans lequel chacun de la pluralité de véhicules suiveurs transmet les informations de statut au véhicule de tête par communication PC5, et les informations de statut comprennent un type d'un capteur installé sur le véhicule respectif, une information quant à si le véhicule respectif est autorisé à partager des données de capteur, un type de données de capteur que le véhicule respectif est autorisé à partager et une fréquence à laquelle le véhicule respectif partage les données de capteur ;
une unité de génération (1004) configurée pour, selon les informations de statut de chaque véhicule, générer des informations de configuration de partage de données pour le convoi de véhicules, les informations de configuration de partage de données représentant une stratégie de partage de données de capteur de chaque véhicule comprenant : les véhicules avec lesquels les données de capteur doivent être partagées, un type des données de capteur qui doivent être partagées, et une fréquence de partage des données de capteur ; et
une unité de transmission (1006) configurée pour transmettre les informations de configuration de partage de données au véhicule de tête de sorte que le véhicule de tête analyse les informations de configuration de partage de données afin d'obtenir les stratégie de partage de données de capteur de chaque véhicule et distribue la stratégie de partage de données de capteur à chaque véhicule par communication PC5 ; et chaque véhicule effectue un traitement de partage de données de capteur selon les stratégie de partage de données de capteur.

3. Support lisible par ordinateur stockant un programme informatique, le programme informatique, lorsqu'il est exécuté par un processeur, mettant en œuvre le procédé de partage de données appliqué à un convoi de véhicules selon la revendication 1.

4. Produit de programme informatique comprenant une instruction informatique, l'instruction informatique étant stockée dans un support de stockage lisible par ordinateur, et un processeur d'un dispositif informatique lisant l'instruction informatique à partir du support de stockage lisible par ordinateur et exécutant l'instruction informatique pour amener le dispositif informatique à mettre en œuvre le procédé de partage de données appliqué à un convoi de véhicules selon la revendication 1.
